# EUROPEAN PATENT APPLICATION

(11) **EP 4 836 239 A1**
(43) Date of publication of application: **04.11.2026**
(21) Application number: 24910963.8
(22) Date of filing: 20.12.2024
(51) Int. Cl.: H02K 1/12, H02K 1/2793, H02K 1/20, H02K 5/20, H02K 9/19, H02K 41/03

(54) **MAGNETIC CORE ASSEMBLY FOR ELECTRIC MOTOR, ELECTRIC MOTOR, SUSPENSION SYSTEM, AND VEHICLE**

(30) Priority: 29.12.2023 CN 202311867985
(71) Applicant: BYD Company Limited, Shenzhen, Guangdong 518118 (CN)
(72) Inventor: LIAN, Yubo, Shenzhen, Guangdong 518118 (CN); LIAO, Yinsheng, Shenzhen, Guangdong 518118 (CN); ZHOU, Keyu, Shenzhen, Guangdong 518118 (CN); SUN, Xianmeng, Shenzhen, Guangdong 518118 (CN); ZHANG, Feng, Shenzhen, Guangdong 518118 (CN)
(74) Representative: Mathys & Squire
(86) International application number: PCT/CN2024/140982
(87) International publication number: WO 2025/140034

(57) **Abstract**

A magnetic core assembly of a motor, the motor, a suspension system, and a vehicle are provided. The magnetic core assembly of the motor includes a central rod and a magnetic core. The central rod is provided with a first limiting portion and a second limiting portion that are spaced apart in an axial direction of the central rod. The magnetic core is sleeved on the central rod and located between the first limiting portion and the second limiting portion. The first limiting portion and the second limiting portion engage with the magnetic core respectively to limit displacement of the magnetic core in an axial direction.

## Description

This application claims priority to Chinese Patent Application No. 202311867985.3 on December 29, 2023, which is incorporated herein by reference in its entirety.

### TECHNICAL FIELD

The present disclosure relates to the field of motor technologies, and in particular, to a magnetic core assembly of a motor, the motor, a suspension system, and a vehicle.

### BACKGROUND

A magnetic core is an important part of a motor and is provided in the motor. The magnetic core is used to increase magnetic flux of an inductor coil to achieve efficient electromagnetic power conversion.

### SUMMARY

The present disclosure is intended to resolve at least one of the technical problems existing in the conventional technologies. Therefore, the present disclosure provides a magnetic core assembly of a motor. In the magnetic core assembly of the motor, a magnetic core is disposed between a first limiting portion and a second limiting portion, so that the magnetic core is prevented from moving relative to a central rod in an axial direction of the central rod. This facilitates a more secure arrangement of the magnetic core on the central rod and prevents the magnetic core from detaching from the central rod.

The present disclosure further provides the motor having a magnetic core assembly of the motor.

The present disclosure further provides a suspension system having the motor.

The present disclosure further provides a vehicle having the suspension system.

A magnetic core assembly of a motor according to an embodiment of a first aspect of the present disclosure includes a central rod and a magnetic core. The central rod is provided with a first limiting portion and a second limiting portion that are spaced apart in an axial direction of the central rod. The magnetic core is sleeved on the central rod, and the magnetic core is located between the first limiting portion and the second limiting portion. The first limiting portion and the second limiting portion engage with the magnetic core respectively to limit displacement of the magnetic core in an axial direction.

According to the magnetic core assembly of the motor according to the embodiment of the present disclosure, the magnetic core is disposed between the first limiting portion and the second limiting portion, so that the magnetic core is prevented from moving relative to the central rod in the axial direction of the central rod. This facilitates a more secure arrangement of the magnetic core on the central rod and prevents the magnetic core from detaching from the central rod.

In addition, the magnetic core assembly of the motor according to the foregoing embodiment of the present disclosure may further have the following additional technical features.

According to some embodiments of the present disclosure, one of the first limiting portion and the second limiting portion is integrally formed with the central rod.

According to some embodiments of the present disclosure, the central rod is provided with a protrusion portion protruding outward in a radial direction to define the first limiting portion, and a first corner between the protrusion portion and the central rod is spaced apart from the magnetic core.

According to some embodiments of the present disclosure, the second limiting portion is detachably connected to the central rod.

According to some embodiments of the present disclosure, the second limiting portion is formed as a threaded member, and the threaded member is threadedly fitted with the central rod.

In some embodiments, the threaded member includes a first portion and a second portion. The first portion is threadedly fitted with the central rod. A thickness of the first portion in the axial direction is greater than a thickness of the second portion in the axial direction. At least a part of the second portion abuts against the magnetic core.

In some examples, wiring space is provided between the second portion and the magnetic core.

In some embodiments, the magnetic core assembly of the motor further includes a buffer member, and a mounting structure engaging with the buffer member is formed on the second limiting portion.

In some examples, the mounting structure is formed at an end of the second limiting portion that is away from the first limiting portion. The mounting structure is configured to be a groove. An opening of the groove faces the central rod. At least a part of the buffer member is press-fitted into the groove.

According to some embodiments of the present disclosure, at least one of the first limiting portion and the second limiting portion is mounted to an end portion of the central rod and a part of at least one of the first limiting portion and the second limiting portion extends into the central rod.

According to some embodiments of the present disclosure, the central rod is in an interference fit with the magnetic core.

According to some embodiments of the present disclosure, the magnetic core assembly of the motor further includes a limiting rod. A first recess portion is provided on the central rod, and a second recess portion is provided on the magnetic core. An outer circumferential surface of the limiting rod separately engages with the first recess portion and the second recess portion.

According to some embodiments of the present disclosure, the magnetic core includes a multi-layer iron core. The multi-layer iron core is stacked in the axial direction of the central rod. A coil is disposed between adjacent layers of iron cores. Coils of adjacent layers are electrically connected.

According to some embodiments of the present disclosure, the first limiting portion and the second limiting portion are respectively in direct contact with iron cores located at two ends of the central rod in the multi-layer iron core.

According to some embodiments of the present disclosure, the central rod is provided with a flow passage for circulating a heat exchange medium.

According to some embodiments of the present disclosure, the flow passage is provided with an inlet and an outlet located on the top of the central rod.

According to a motor according to an embodiment of a second aspect of the present disclosure, the motor includes the magnetic core assembly of the motor according to the embodiment of the first aspect of the present disclosure.

According to the motor according to the embodiment of the present disclosure, the magnetic core assembly according to the embodiment of the first aspect of the present disclosure is utilized. A magnetic core is disposed between a first limiting portion and a second limiting portion, so that the magnetic core is prevented from moving relative to a central rod in an axial direction of the central rod. This facilitates a more secure arrangement of the magnetic core on the central rod and prevents the magnetic core from detaching from the motor.

According to a suspension system according to an embodiment of a third aspect of the present disclosure, the suspension system includes the motor according to the embodiment of the second aspect of the present disclosure.

According to the suspension system according to the embodiment of the present disclosure, the motor according to the embodiment of the second aspect of the present disclosure is utilized. A magnetic core is disposed between a first limiting portion and a second limiting portion, so that the magnetic core is prevented from moving relative to a central rod in an axial direction of the central rod. This facilitates a more secure arrangement of the magnetic core on the central rod and prevents the magnetic core from detaching from the motor.

According to a vehicle according to an embodiment of a fourth aspect of the present disclosure, the vehicle includes the suspension system according to the embodiment of the second aspect of the present disclosure.

According to the vehicle according to the embodiment of the present disclosure, the suspension system according to the embodiment of the third aspect of the present disclosure is utilized. A magnetic core is disposed between a first limiting portion and a second limiting portion, so that the magnetic core is prevented from moving relative to a central rod in an axial direction of the central rod. This facilitates a more secure arrangement of the magnetic core on the central rod and prevents the magnetic core from detaching from the motor.

A part of additional aspects and advantages of the present disclosure are provided in the following descriptions, and become apparent from the following descriptions, or are learned from the practice of the present disclosure.

### DESCRIPTION OF DRAWINGS

The foregoing and/or additional aspects and advantages of the present disclosure become apparent and readily understood from the descriptions of embodiments with reference to the following accompanying drawings.
FIG. 1 is a diagram of a structure of a motor according to an embodiment of the present disclosure;
FIG. 2 is a sectional view of FIG. 1 along an A-A line;
FIG. 3 is an enlarged view of part B circled in FIG. 2;
FIG. 4 is an enlarged view of part C circled in FIG. 2;
FIG. 5 is a diagram of another structure of a motor according to an embodiment of the present disclosure;
FIG. 6 is a sectional view of FIG. 5 along a D-D line;
FIG. 7 is an enlarged view of part E circled in FIG. 6;
FIG. 8 is a diagram of a part of a structure of a motor according to an embodiment of the present disclosure;
FIG. 9 is a diagram of a structure of a magnetic core assembly according to an embodiment of the present disclosure;
FIG. 10 is a sectional view of the magnetic core assembly of FIG. 9;
FIG. 11 is a top view of a magnetic core assembly according to an embodiment of the present disclosure;
FIG. 12 is an enlarged view of part F circled in FIG. 11; and
FIG. 13 is a diagram of a multi-layer iron core press-fitted into a central rod according to an embodiment of the present disclosure.

### Reference numerals:

1000: motor;
100: magnetic core assembly; 10: central rod; 11: protrusion portion; 12: flow passage; 13: first corner; 16: first limiting portion; 17: second limiting portion; 171: groove; 18: first recess portion;
20: magnetic core; 21; iron core; 211: second corner; 22: abutting protrusion; 25: coil; 28: second recess portion;
30: threaded member; 31: first portion; 32: second portion; 39: wiring space;
411: piston portion; 412: abutting portion;
500: rotor assembly; 51: housing; 511: first stop portion; 512: second stop portion; 52: fitting portion; 53: magnetic fitting member; 61: buffer member; 62: limiting rod.

### DESCRIPTION OF EMBODIMENTS

The following describes embodiments of the present disclosure in detail, and examples of embodiments are illustrated in the accompanying drawings. Identical or similar reference numerals refer to the identical or similar elements or elements having the identical or similar functions throughout. The embodiments described below with reference to the accompanying drawings are exemplary and are merely used to describe the present disclosure, but cannot be understood as a limitation on the present disclosure.

A magnetic core is an important part of a motor and is provided in the motor. However, prolonged use of the motor may result in a risk of detachment of the magnetic core. Therefore, an embodiment of the present disclosure provides a magnetic core assembly, to reduce the risk of the detachment of the magnetic core.

The following describes a magnetic core assembly 100 of a motor 1000 according to the embodiment of the present disclosure with reference to the accompanying drawings.

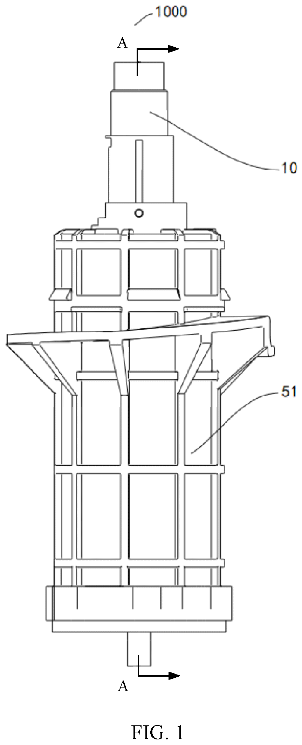

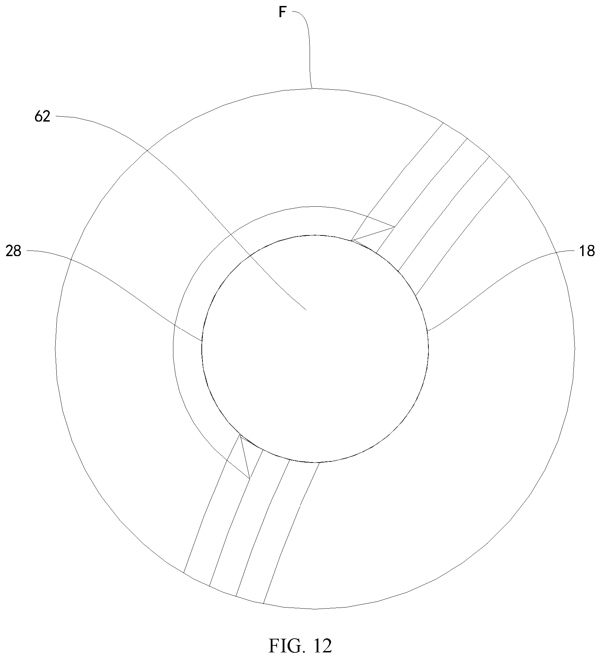

As shown in FIG. 1 to FIG. 13, the magnetic core assembly 100 of the motor 1000 according to the embodiment of the present disclosure includes a central rod 10 and a magnetic core 20.

The magnetic core 20 is sleeved on the central rod 10, so that the magnetic core 20 is disposed on the central rod 10. For example, the central rod 10 is provided with a first limiting portion 16 and a second limiting portion 17 that are spaced apart in an axial direction of the central rod 10. The magnetic core 20 is located between the first limiting portion 16 and the second limiting portion 17, and the first limiting portion 16 and the second limiting portion 17 engage with the magnetic core 20 respectively to limit displacement of the magnetic core 20 in an axial direction, to prevent the magnetic core 20 from moving relative to the central rod 10 in the axial direction of the central rod 10. This facilitates a more secure arrangement of the magnetic core 20 on the central rod 10 and prevents the magnetic core 20 from detaching from the central rod 10.

According to the magnetic core assembly 100 of the motor 1000 according to the embodiment of the present disclosure, the magnetic core 20 is disposed between the first limiting portion 16 and the second limiting portion 17, so that the magnetic core 20 is prevented from moving relative to the central rod 10 in the axial direction of the central rod 10. This facilitates the more secure arrangement of the magnetic core 20 on the central rod 10 and prevents the magnetic core 20 from detaching from the central rod 10.

The following describes the magnetic core assembly 100 of a motor 1000 according to some embodiments of the present disclosure with reference to the accompanying drawings.

In some embodiments of the present disclosure, as shown in FIG. 1 to FIG. 7, the magnetic core assembly 100 of the motor 1000 includes the central rod 10 and the magnetic core 20.

In some embodiments of the present disclosure, one of the first limiting portion 16 and the second limiting portion 17 is integrally formed with the central rod 10. This facilitates a reduction in a quantity of parts of the magnetic core assembly 100 and reduces structural complexity of the magnetic core assembly 100.

For example, the first limiting portion 16 and the central rod 10 are an integrally formed member. Because relative positions of the first limiting portion 16 and the central rod 10 are unchanged, when the magnetic core 20 is sleeved on the central rod 10, the first limiting portion 16 conveniently engages with the magnetic core 20, to utilize the first limiting portion 16 to define a position of the magnetic core 20 in the axial direction of the central rod 10.

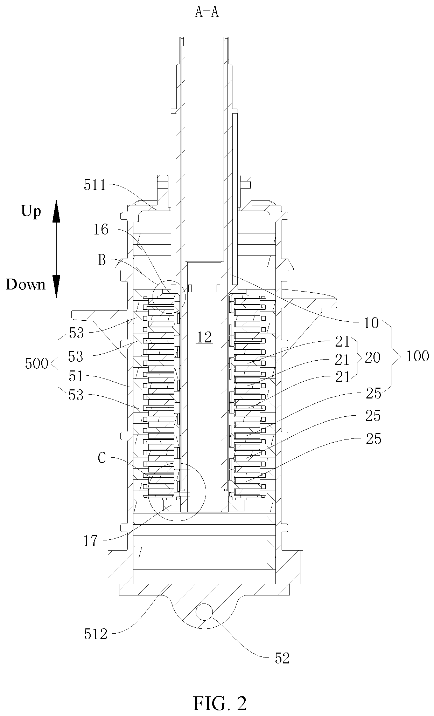

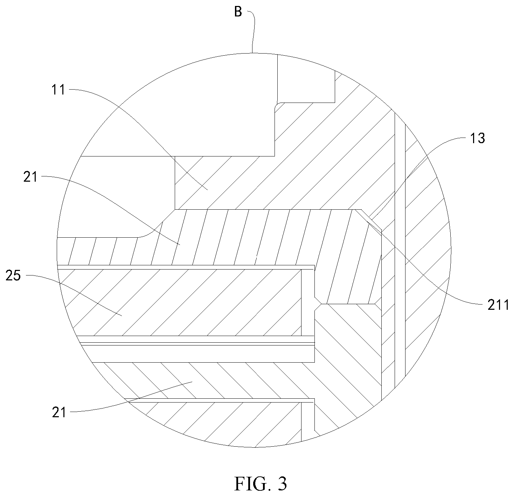

In some embodiments of the present disclosure, as shown in FIG. 2 and FIG. 3, the central rod 10 is provided with a protrusion portion 11 protruding outward in a radial direction to define one of the first limiting portion 16 and the second limiting portion 17. The protrusion portion 11 engages with the magnetic core 20 to limit the displacement of the magnetic core 20 in the axial direction. For example, a first corner 13 between the protrusion portion 11 and the central rod 10 is spaced apart from the magnetic core 20. This facilitates contact fitting between the protrusion portion 11 and the magnetic core 20, so that the protrusion portion 11 can limit the displacement of the magnetic core 20 in the axial direction, preventing an edge of the magnetic core 20 from interfering with the first corner 13 when the magnetic core 20 is sleeved on the central rod 10, and avoiding affecting fitting between the magnetic core 20 and the protrusion portion 11.

In addition, a cross section of the central rod 10 at the protrusion portion 11 changes abruptly, which causes stress on the first corner 13 to be greater than average stress on the central rod 10. Therefore, the first corner 13 and the magnetic core 20 are spaced apart, to prevent interaction force between the magnetic core 20 and the first corner 13, thereby avoiding damage to the central rod 10 caused by excessive acting force applied at the first corner 13.

For example, the protrusion portion 11 serves as the first limiting portion 16, and the first limiting portion 16 and the central rod 10 are an integrally formed member, so that space occupied by the first limiting portion 16 and the central rod 10 can be reduced, to reserve larger space for the magnetic core 20. This facilitates maintenance of a gap between the magnetic core 20 and other parts in the motor 1000, thereby avoiding interference between the magnetic core 20 and the other parts in the motor 1000. In this way, the motor 1000 can smoothly output power. In addition, during operation of the motor 1000, heat is generated around the magnetic core 20. The large space is reserved for the magnetic core 20, so that the heat inside the motor 1000 can be quickly dissipated.

In some embodiments, the axial direction of the central rod 10 extends in an up-down direction of the drawing, the protrusion portion 11 is located at an upper end of the magnetic core 20, and the protrusion portion 11 abuts against the upper end of the magnetic core 20, to limit upward movement of the magnetic core 20, and prevent the magnetic core 20 from detaching from the central rod 10 due to the upward movement.

In some embodiments, as shown in FIG. 3, the magnetic core 20 has a second corner 211, and a chamfer at the second corner 211 is greater than a chamfer at the first corner 13, so that the first corner 13 and the second corner 211 are spaced apart. The magnetic core 20 is in an interference fit with the central rod 10, resulting in larger assembly stress generated on a fitting surface between the magnetic core 20 and the central rod 10. Therefore, the first corner 13 and the second corner 211 are spaced apart, to transmit assembly stress from the interference fit along a surface instead of along an oblique angle, so that the magnetic core 20 at the first corner 13 is not subject to excessive assembly stress, thereby having better effect on avoiding stress concentration in the magnetic core 20.

In addition, the magnetic core 20 and the first corner 13 are spaced apart, so that the upper end of the magnetic core 20 can be smoothly in contact fitting with a lower bottom wall of the protrusion portion 11 when the magnetic core 20 is sleeved on the central rod 10, thereby utilizing the protrusion portion 11 to limit the upward movement of the magnetic core 20.

In some embodiments of the present disclosure, the second limiting portion 17 is detachably connected to the central rod 10. The second limiting portion 17 is mounted and detached, so that the magnetic core 20 is conveniently sleeved on the central rod 10, or the magnetic core 20 is removed from the central rod 10.

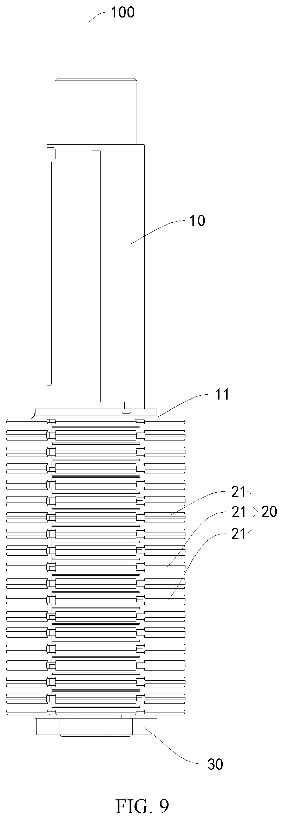

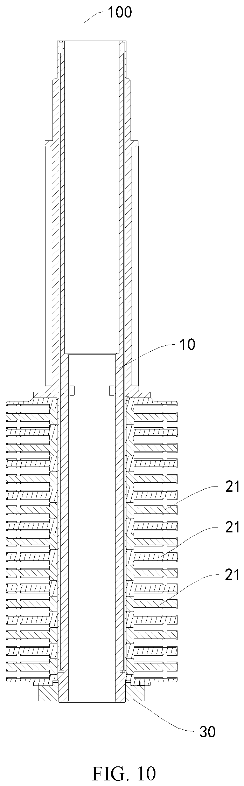

In some embodiments of the present disclosure, as shown in FIG. 9 and FIG. 10, the second limiting portion 17 is formed as a threaded member 30. An external thread is formed on the central rod 10. The threaded member 30 is threadedly fitted with the central rod 10, so that the threaded member 30 can be detachably disposed on the central rod 10. In this way, after the magnetic core 20 is sleeved on the central rod 10 in the axial direction of the central rod 10, the threaded member 30 is mounted on the central rod 10, so that the threaded member 30 is engaged with the magnetic core 20, to limit the displacement of the magnetic core 20 in the axial direction of the central rod 10 after the magnetic core 20 is mounted in place.

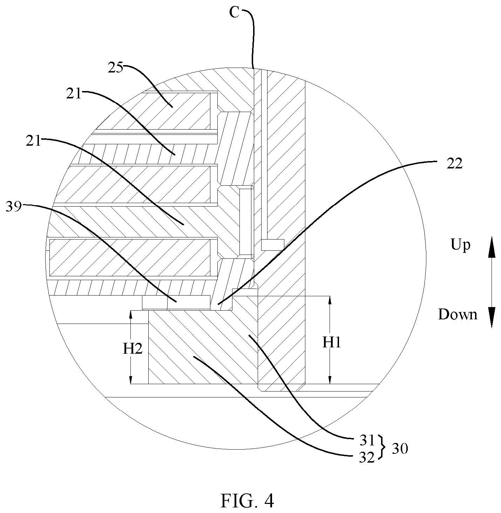

In some embodiments of the present disclosure, as shown in FIG. 4, the threaded member 30 includes a first portion 31 and a second portion 32. The first portion 31 is threadedly fitted with the central rod 10. A thickness of the first portion 31 in the axial direction is greater than a thickness of the second portion 32 in the axial direction, to increase a threaded fitting area between the first portion 31 and the central rod 10, and further facilitate secure arrangement of the threaded member 30 on the central rod 10. At least a part of the second portion 32 abuts against the magnetic core 20, thereby utilizing the threaded member 30 to limit the displacement of the magnetic core 20 in the axial direction of the central rod 10.

In this way, the second portion 32 abuts against the magnetic core 20, so that heat transfer between the second portion 32 and the magnetic core 20 can be achieved, thereby further making it easier for the magnetic core 20 inside the motor 1000 to dissipate the heat.

As shown in FIG. 2 and FIG. 4, in this embodiment, the first portion 31 is located on an inner side of the second portion 32. The first portion 31 has an internal thread, and the central rod 10 has the external thread. The axial direction of the central rod 10 extends in the up-down direction of the drawing. The thickness of the first portion 31 in the axial direction extending in the up-down direction is H1, the thickness of the second portion 32 in the axial direction extending in the up-down direction is H2, and H1 is greater than H2, to increase a fitting area between the first portion 31 and the central rod 10, and further facilitate secure fastening of the threaded member 30 on the central rod 10, so that the threaded member 30 can support the magnetic core 20 in limiting downward displacement of the magnetic core 20.

Herein, it will be noted that an inner side and an outer side are positions relative to the central rod 10. The first portion 31 is closer to the central rod 10, and the second portion 32 is farther from the central rod 10. In other words, the first portion 31 is closer to the central rod 10 than the second portion 32, and therefore the first portion 31 is located on the inner side of the second portion 32.

In some embodiments, as shown in FIG. 4, wiring space 39 is provided between the second portion 32 and the magnetic core 20, to allow an external wire to conveniently pass through the wiring space 39 to be connected to the magnetic core assembly 100, thereby further achieving electrical connection between an external controller and a power supply and the magnetic core assembly 100.

As shown in FIG. 2 and FIG. 4, in this embodiment, the axial direction of the central rod 10 extends in the up-down direction of the drawing. The threaded member 30 is disposed at a lower portion of the central rod 10, and the threaded member 30 abuts against a lower end of the magnetic core 20, to limit the downward displacement of the magnetic core 20 and prevent the magnetic core 20 from detaching from the central rod 10 due to downward movement. For example, the lower end of the magnetic core 20 has an abutting protrusion 22 protruding downward from a lower wall surface of the magnetic core 20, and the abutting protrusion 22 abuts against an upper end surface of the second portion 32, to define the wiring space 39 between the lower wall surface of the magnetic core 20 and the upper end surface of the second portion 32.

In some embodiments, an inner side portion of the magnetic core 20 is in an interference fit with the central rod 10, and larger assembly stress is generated on a fitting surface between the inner side portion of the magnetic core 20 and the central rod 10. The first portion 31 is threadedly fitted with the central rod 10, and larger assembly stress is generated on a threaded connection surface between the first portion 31 and the central rod 10. Therefore, the inner side portion of the magnetic core 20 and the first portion 31 are spaced apart, to avoid acting force between the inner side portion of the magnetic core 20 and the first portion 31, thereby avoiding damage to the inner side portion of the magnetic core 20 due to excessive acting force, and avoiding damage to the first portion 31 due to the excessive acting force.

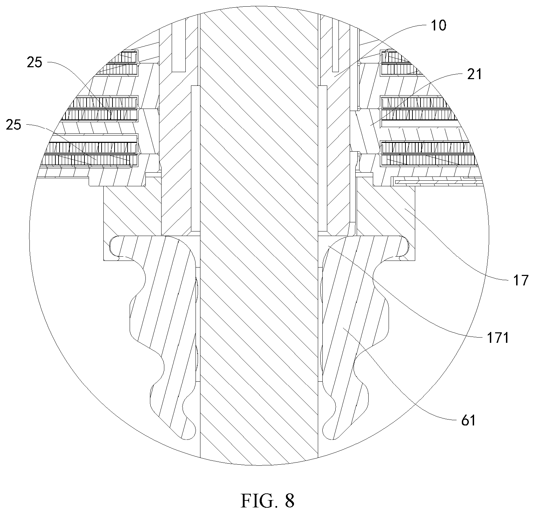

In some embodiments of the present disclosure, as shown in FIG. 8, the magnetic core assembly 100 further includes a buffer member 61. A mounting structure engaging with the buffer member 61 is formed on the second limiting portion 17. When the magnetic core assembly 100 moves, the buffer member 61 is configured to cushion impact on an end portion of the magnetic core assembly 100, to avoid direct impact on the end portion of the magnetic core assembly 100, thereby protecting the end portion of the magnetic core assembly 100.

As shown in FIG. 8, in this embodiment, the buffer member 61 is disposed at a lower end of the second limiting portion 17, and the buffer member 61 is configured to cushion impact force on a lower end of the magnetic core assembly 100. In addition, when the buffer member 61 is subject to impact force, at least a part of the buffer member 61 is deformed without displacing or inclining relative to the second limiting portion 17. In this way, in an operating condition in which the magnetic core assembly 100 bounces up and down, uneven forces on the magnetic core assembly 100 caused by movement of the buffer member 61 are avoided, thereby ensuring stable operation of the motor 1000.

In some embodiments of the present disclosure, as shown in FIG. 8, the mounting structure is formed at an end of the second limiting portion 17 that is away from the first limiting portion 16. The mounting structure is configured to be a groove 171. An opening of the groove 171 faces the central rod 10. At least a part of the buffer member 61 is press-fitted into the groove 171. For example, a part of the buffer member 61 or all of the buffer member 61 may be press-fitted into the groove 171. In this way, the buffer member 61 may be fastened at the end of the second limiting portion 17 that is away from the first limiting portion 16, so that the buffer member 61 can cushion the impact force on the lower end of the magnetic core assembly 100.

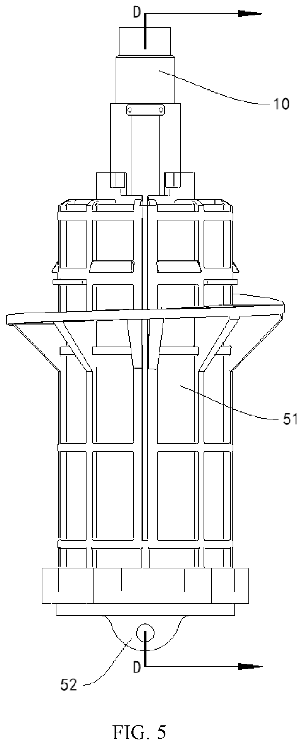

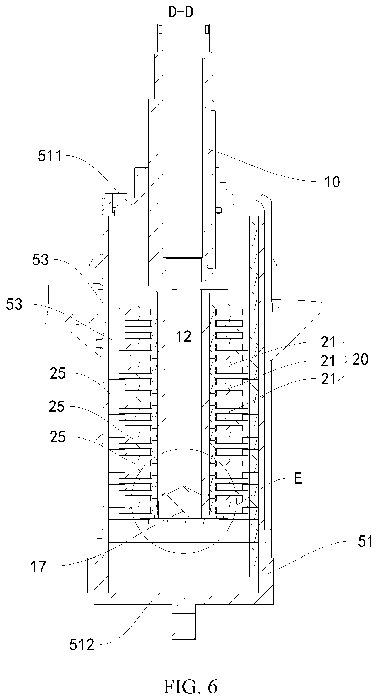

In an alternative solution, in some embodiments of the present disclosure, as shown in FIG. 5 and FIG. 6, at least one of the first limiting portion 16 and the second limiting portion 17 is mounted to an end portion of the central rod 10 and a part of at least one of the first limiting portion 16 and the second limiting portion 17 extends into the central rod 10, so that at least one of the first limiting portion 16 and the second limiting portion 17 is detachably disposed in the central rod 10. In this way, the magnetic core 20 is sleeved on the central rod 10 in the axial direction of the central rod 10, and at least one of the first limiting portion 16 and the second limiting portion 17 is mounted on the central rod 10, to limit the displacement of the magnetic core 20 in the axial direction of the central rod 10 after the magnetic core 20 is mounted in place.

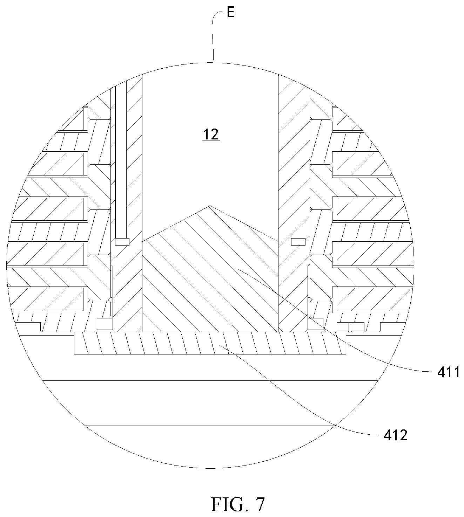

In some embodiments, as shown in FIG. 6 and FIG. 7, the second limiting portion 17 is mounted to the end portion of the central rod 10 and a part of the second limiting portion 17 extends into the central rod 10. The second limiting portion 17 includes a piston portion 411 and an abutting portion 412. The abutting portion 412 is fastened to an outer circumference of the piston portion 411 (for example, an outer circumference of a lower end of the piston portion 411). The piston portion 411 is made of elastic material. When the piston portion 411 extends into the central rod 10, the piston portion 411 is elastically deformed and compressed, to be interference fit with the inside of the central rod 10, so that the piston portion 411 and the abutting portion 412 can be fastened to the central rod 10. For example, the abutting portion 412 protrudes from the piston portion 411 in a radial direction of the central rod 10, and the abutting portion 412 engages with the magnetic core 20, to limit the displacement of the magnetic core 20 in the axial direction of the central rod 10.

In some other embodiments, the second limiting portion 17 is mounted to the end portion of the central rod 10 and a part of the second limiting portion 17 extends into the central rod 10. The second limiting portion 17 has an external thread, and the central rod 10 has an internal thread. The second limiting portion 17 extends into the central rod 10 and is threadedly fitted with the central rod 10, to fasten the second limiting portion 17 to the central rod 10, thereby utilizing the second limiting portion 17 to limit the position of the magnetic core 20 in the axial direction of the central rod 10.

In some embodiments, the central rod 10 is formed as a hollow member. This facilitates a reduction in weight of the central rod 10 and further facilitates a lightweight configuration of the magnetic core assembly 100.

In some examples, as shown in FIG. 6, the central rod 10 defines a flow passage 12 for circulating a heat exchange medium. When the heat exchange medium flows in the flow passage 12, heat generated by the magnetic core assembly 100 can be carried away, thereby cooling the magnetic core assembly 100. The piston portion 411 extends into the flow passage 12 and is in an interference fit with the flow passage 12 to seal the flow passage 12.

In some embodiments of the present disclosure, the central rod 10 is in an interference fit with the magnetic core 20, to limit movement of the magnetic core 20 in the radial direction of the central rod 10, thereby preventing the magnetic core 20 from shaking on the central rod 10 in the radial direction of the central rod 10, facilitating a reduction in a possibility of the magnetic core 20 detaching from the central rod 10.

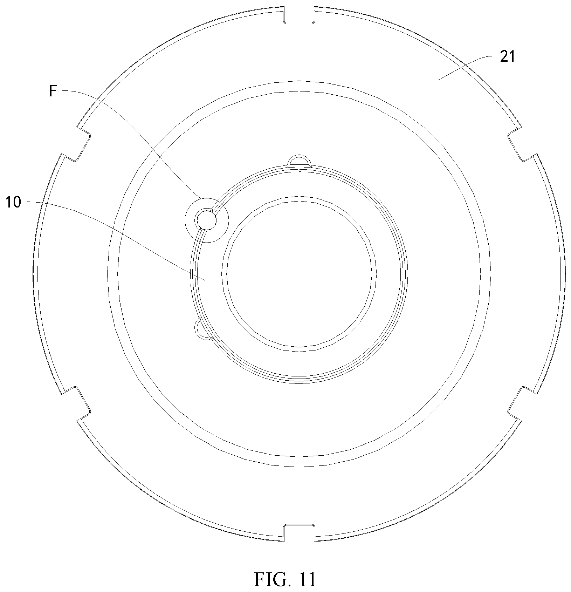

In some embodiments of the present disclosure, as shown in FIG. 11 to FIG. 13, the magnetic core assembly 100 further includes a limiting rod 62. A first recess portion 18 is provided on the central rod 10, and a second recess portion 28 is provided on the magnetic core 20. An outer circumferential surface of the limiting rod 62 separately engages with the first recess portion 18 and the second recess portion 28. When the magnetic core 20 and the central rod 10 tend to rotate relative to each other, the limiting rod 62 can limit rotation of the magnetic core 20 and the central rod 10, to avoid relative rotation between the magnetic core 20 and the central rod 10.

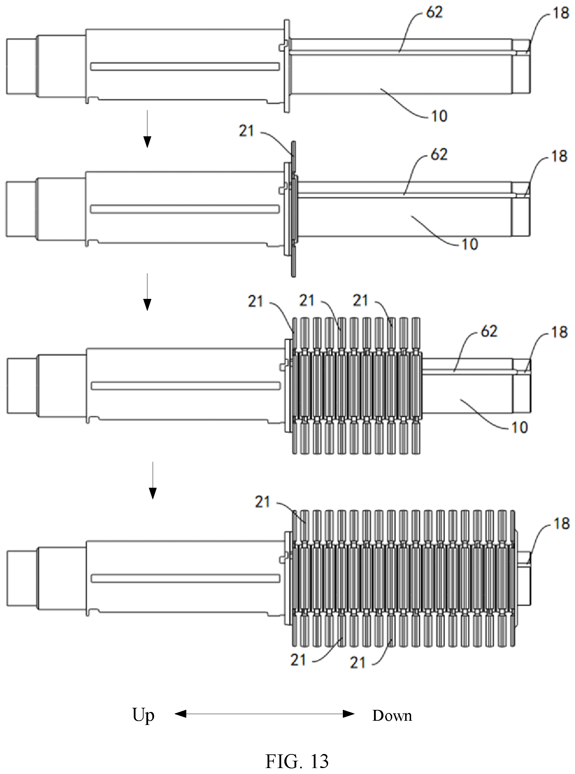

In some embodiments, as shown in FIG. 13, a length direction of the first recess portion 18 on the central rod 10 extends in an up-down direction of the central rod 10, and a length direction of the limiting rod 62 extends in the up-down direction of the central rod 10. The limiting rod 62 is disposed in the first recess portion 18 (for example, the limiting rod 62 is bonded to the first recess portion 18). In addition, a part of the outer circumferential surface of the limiting rod 62 is attached to a wall surface of the first recess portion 18. When the magnetic core 20 is sleeved on the central rod 10, the limiting rod 62 is disposed opposite to the second recess portion 28 on the magnetic core 20, so that relative positions of the central rod 10 and the magnetic core 20 can be positioned, and the limiting rod 62 can also be utilized to guide movement direction of the magnetic core 20.

In some examples, the limiting rod 62 is formed in a cylindrical shape, and projections of the first recess portion 18 and the second recess portion 28 in the up-down direction of the central rod 10 form a circular shape, so that an outer circumferential wall of the limiting rod 62 is attached to the first recess portion 18 and the second recess portion 28, thereby limiting the relative rotation between the central rod 10 and the magnetic core 20.

For example, the projections of the first recess portion 18 and the second recess portion 28 in the up-and-down direction of the central rod 10 may be a semicircle with the same radius, so that the projections of the first recess portion 18 and the second recess portion 28 in the up-down direction are formed in a circular shape.

In some other embodiments, a groove and a protrusion may be respectively provided on the central rod 10 and the magnetic core 20. For example, one of the central rod 10 and the magnetic core 20 is provided with the groove, and the other of the central rod 10 and the magnetic core 20 is provided with the protrusion engaging with the groove. In this way, the groove engages with the protrusion, so that the relative rotation between the central rod 10 and the magnetic core 20 can be limited.

In some embodiments of the present disclosure, as shown in FIG. 2, the magnetic core 20 includes a multi-layer iron core 21. The multi-layer iron core 21 is stacked in the axial direction of the central rod 10. A coil 25 is disposed between adjacent layers of iron cores 21, and coils 25 of adjacent layers are electrically connected. When the coil 25 is energized, a magnetic field can be generated around the magnetic core 20, and the magnetic field is configured to be magnetically coupled to the other parts of the motor 1000, to achieve power output of the motor 1000. The magnetic core 20 is formed by the multi-layer iron core 21, making it easier to reduce manufacturing difficulty. In addition, the coil 25 is conveniently provided in the magnetic core 20, so that the uniform magnetic field can be generated around the magnetic core 20 when the coil 25 is energized.

For example, the multi-layer iron core 21 and a multi-layer coil 25 form the magnetic core 20, facilitating the lightweight configuration of the magnetic core 20.

In some embodiments, the iron core 21 is made of magnetic conductive material, for example, iron, cobalt, or nickel, so that the iron core 21 is magnetic. The central rod 10 is made of non-magnetic conductive material, preventing the central rod 10 from affecting a magnetic circuit of the magnetic core 20.

In some embodiments, the iron core 21 is sleeved on the central rod 10 and is in an interference fit with the central rod 10. This facilitates heat transfer between the central rod 10 and the iron core 21, thereby further facilitating heat dissipation of the magnetic core assembly 100.

In some embodiments of the present disclosure, when the magnetic core 20 includes the multi-layer iron core 21, the first limiting portion 16 and the second limiting portion 17 are respectively in direct contact with iron cores 21 located at two ends of the central rod 10, to limit displacement of the iron core 21 in the axial direction of the central rod 10. For example, the first limiting portion 16 and the second limiting portion 17 can press a plurality of iron cores 21, utilizing the iron core 21 to define a position of the coil 25, so that the iron core 21 and the coil 25 can generate the uniform and stable magnetic field.

For example, the plurality of iron cores 21 are disposed between the first limiting portion 16 and the second limiting portion 17, and the plurality of iron cores 21 are sleeved on the central rod 10 through layered press-fitting, to limit positions of the plurality of iron cores 21 in the axial direction of the central rod 10.

In some embodiments of the present disclosure, as shown in FIG. 2, the central rod 10 is provided with the flow passage 12 for circulating the heat exchange medium. When the heat exchange medium flows in the flow passage 12, heat on the magnetic core 20 can be carried away, thereby cooling the magnetic core assembly 100.

In some embodiments, the magnetic core 20 includes the plurality of iron cores 21, and the coil 25 is disposed between two adjacent iron cores 21. After the coil 25 is energized, heat is generated on the coil 25, and the generated heat is transferred to the iron core 21. For example, the magnetic core 20 is sleeved on the central rod 10 and is in an interference fit with the central rod 10, to ensure that the magnetic core 20 is in contact with the central rod 10, so that the heat on the iron core 21 can be transferred to the central rod 10. When the heat exchange medium flows in the flow passage 12, heat on the central rod 10 can be carried away, thereby reducing temperatures of the iron core 21 and the coil 25.

In some embodiments of the present disclosure, the flow passage 12 is provided with an inlet and an outlet located on the top of the central rod 10, so that the heat exchange medium can flow in the flow passage 12, and the heat on the central rod 10 is carried away during flow, thereby cooling the magnetic core assembly 100. For example, the heat exchange medium may enter the flow passage 12 through the inlet, and then flow out through the outlet after exchanging heat with the central rod 10.

The following describes a motor 1000 according to an embodiment of the present disclosure. The motor 1000 according to the embodiment of the present disclosure includes the magnetic core assembly 100 of the motor 1000 according to the foregoing embodiments of the present disclosure.

According to the motor 1000 according to the embodiment of the present disclosure, the magnetic core assembly 100 of the motor 1000 according to the foregoing embodiment of the present disclosure is utilized. A magnetic core 20 is disposed between a first limiting portion 16 and a second limiting portion 17, so that the magnetic core 20 is prevented from moving relative to a central rod 10 in an axial direction of the central rod 10. This facilitates a more secure arrangement of the magnetic core 20 on the central rod 10 and prevents the magnetic core 20 from detaching from the central rod 10.

In some embodiments of the present disclosure, the magnetic core assembly 100 is a stator assembly of the motor 1000. The motor 1000 further includes a rotor assembly 500. The rotor assembly 500 is magnetically coupled to the magnetic core assembly 100. After the magnetic core assembly 100 is energized, a varying magnetic field generated by the magnetic core assembly 100 can drive the rotor assembly 500 to move, and the motor 1000 outputs power through the rotor assembly 500.

As shown in FIG. 2, in this embodiment, the rotor assembly 500 includes a housing 51 and a magnetic fitting member 53. The housing 51 defines an accommodation cavity. The magnetic fitting member 53 is fastened to an inner wall of the accommodation cavity. The magnetic core 20 is located in the accommodation cavity, and the magnetic core 20 is at least partially opposite to the magnetic fitting member 53. When the magnetic core assembly 100 is energized, and a varying magnetic field is generated, the magnetic fitting member 53 is driven to move, and the housing 51 is driven to move when the magnetic fitting member 53 moves. An end portion of the housing 51 is provided with a fitting portion 52. The fitting portion 52 is configured to be connected to an external part. When the housing 51 moves, the fitting portion 52 is driven to move, and power is output through the fitting portion 52.

The magnetic fitting member 53 includes, but is not limited to, a permanent magnet and an electromagnet, provided that the magnetic fitting member 53 can engage with the coil 25 to generate relative movement.

In some embodiments, under drive of the magnetic field, the rotor assembly 500 moves in the axial direction of the central rod 10. The housing 51 includes a first stop portion 511 and a second stop portion 512. The first stop portion 511 is configured to abut against the first limiting portion 16, and the second stop portion 512 is configured to abut against the second limiting portion 17, to limit a movement path of the rotor assembly 500, and prevent the rotor assembly 500 from detaching from the magnetic core assembly 100.

As shown in FIG. 2, in this embodiment, the axial direction of the central rod 10 extends in an up-down direction of the drawing (herein, it will be understood that the foregoing direction is limited merely for ease of description of the accompanying drawings and does not limit the actual arrangement position and direction of the magnetic core assembly 100 of the motor 1000). The rotor assembly 500 is movable relative to the magnetic core assembly 100 in the up-down direction. The first limiting portion 16 and the second limiting portion 17 are spaced apart in the up-down direction. The first limiting portion 16 is located above the second limiting portion 17. The magnetic core 20 is located between the first limiting portion 16 and the second limiting portion 17.

The first stop portion 511 is located above the first limiting portion 16, and the second stop portion 512 is located below the second limiting portion 17. When the rotor assembly 500 moves downward relative to the magnetic core assembly 100, a distance between the first stop portion 511 and the first limiting portion 16 decreases. When the first stop portion 511 abuts against an upper end of the first limiting portion 16, the rotor assembly 500 cannot continue to move downward. When the rotor assembly 500 moves upward relative to the magnetic core assembly 100, a distance between the second stop portion 512 and the second limiting portion 17 decreases. When the second stop portion 512 abuts against a lower end of the second limiting portion 17, the rotor assembly 500 cannot continue to move downward.

The following describes a suspension system according to an embodiment of the present disclosure. The suspension system according to the embodiment of the present disclosure includes the motor 1000 according to the foregoing embodiment of the present disclosure.

According to the suspension system according to the embodiment of the present disclosure, the motor 1000 according to the foregoing embodiment of the present disclosure is utilized. A magnetic core 20 is disposed between a first limiting portion 16 and a second limiting portion 17, so that the magnetic core 20 is prevented from moving relative to a central rod 10 in an axial direction of the central rod 10. This facilitates a more secure arrangement of the magnetic core 20 on the central rod 10 and prevents the magnetic core 20 from detaching from the central rod 10.

The following describes a vehicle according to an embodiment of the present disclosure. The vehicle according to the embodiment of the present disclosure includes the suspension system according to the foregoing embodiment of the present disclosure.

According to the vehicle according to the embodiment of the present disclosure, the suspension system according to the foregoing embodiment of the present disclosure is utilized. A magnetic core 20 is disposed between a first limiting portion 16 and a second limiting portion 17, so that the magnetic core 20 is prevented from moving relative to a central rod 10 in an axial direction of the central rod 10. This facilitates a more secure arrangement of the magnetic core 20 on the central rod 10 and prevents the magnetic core 20 from detaching from the central rod 10.

Other configurations and operations of the vehicle according to the embodiment of the present disclosure are known to a person of ordinary skill in the art. Details are not described herein again.

In the descriptions of the present disclosure, it will be understood that an orientation or position relationship indicated by the terms, for example, "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial direction", "radial direction", and "circumferential direction", is based on an orientation or position relationship shown in the accompanying drawings. This is merely intended to facilitate description of the present disclosure and simplify the descriptions, but is not intended to indicate or imply that the referred apparatus or element needs to have a specific orientation and be constructed and operated in a specific orientation. Therefore, this cannot be understood as a limitation on the present disclosure. In addition, a feature limited by "first" or "second" may explicitly or implicitly include one or more features. In the descriptions of the present disclosure, unless otherwise specified, "a plurality of" means two or more. In the descriptions of the present disclosure, that a first feature is "above" or "below" a second feature may be that the first feature is in direct contact with the second feature, or may be that the first feature is not in direct contact with the second feature but in contact with the second feature through another feature between the first feature and the second feature.

In the descriptions of the present disclosure, that the first feature is "above", "over", or "on" the second feature includes that the first feature is right above or obliquely above the second feature, or merely indicates that a horizontal height of the first feature is greater than that of the second feature.

In the descriptions of the present disclosure, it will be noted that, unless otherwise expressly specified and limited, the terms "mount", "interconnect", and "connect" will be understood in a broad sense. For example, the terms may indicate a fastening connection, a detachable connection, or an integral connection, may indicate mechanical connection or electrical connection, and may indicate a direct connection, an indirect connection through an intermediate medium, or an internal communication between two elements. For a person of ordinary skill in the art, a specific meaning of the foregoing terms in the present disclosure may be understood based on a specific situation.

In the descriptions of this specification, reference terms such as "an embodiment", "some embodiments", "an example embodiment", "an example", "a specific example", or "some examples" mean that a specific feature, a structure, a material, or a characteristic described with reference to the embodiment or the example is included in at least one embodiment or example of the present disclosure. In this specification, the schematic representations of the foregoing terms do not necessarily refer to the same embodiment or example. In addition, specific features, structures, materials, or characteristics described may be combined in an optimised arrangement in any one or more of embodiments or examples.

Although embodiments of the present disclosure have been shown and described, a person of ordinary skill in the art may understand that various changes, modifications, replacements, and variations may be made to these embodiments without departing from the principles and purposes of the present disclosure. The scope of the present disclosure is defined by the claims and equivalents thereof.

## Claims

1. A magnetic core assembly (100) of a motor, comprising:
a central rod (10), the central rod (10) being provided with a first limiting portion (16) and a second limiting portion (17) that are spaced apart in an axial direction of the central rod (10); and
a magnetic core (20), the magnetic core (20) being sleeved on the central rod (10), the magnetic core (20) being located between the first limiting portion (16) and the second limiting portion (17), and the first limiting portion (16) and the second limiting portion (17) engaging with the magnetic core (20) respectively to limit displacement of the magnetic core (20) in an axial direction.

2. The magnetic core assembly (100) of the motor according to claim 1, wherein one of the first limiting portion (16) and the second limiting portion (17) is integrally formed with the central rod (10).

3. The magnetic core assembly (100) of the motor according to claim 2, wherein the central rod (10) is provided with a protrusion portion (11) protruding outward in a radial direction to define the first limiting portion (16), and a first corner (13) between the protrusion portion (11) and the central rod (10) is spaced apart from the magnetic core (20).

4. The magnetic core assembly (100) of the motor according to claim 1, wherein the second limiting portion (17) is detachably connected to the central rod (10).

5. The magnetic core assembly (100) of the motor according to claim 4, wherein the second limiting portion (17) is formed as a threaded member (30), and the threaded member (30) is threadedly fitted with the central rod (10).

6. The magnetic core assembly (100) of the motor according to claim 5, wherein the threaded member (30) comprises a first portion (31) and a second portion (32), the first portion (31) is threadedly fitted with the central rod (10), a thickness of the first portion (31) in the axial direction is greater than a thickness of the second portion (32) in the axial direction, and at least a part of the second portion (32) abuts against the magnetic core (20).

7. The magnetic core assembly (100) of the motor according to claim 6, wherein wiring space (39) is provided between the second portion (32) and the magnetic core (20).

8. The magnetic core assembly (100) of the motor according to claim 4, further comprising a buffer member (61), a mounting structure engaging with the buffer member (61) being formed on the second limiting portion (17).

9. The magnetic core assembly (100) of the motor according to claim 8, wherein the mounting structure is formed at an end of the second limiting portion (17) that is away from the first limiting portion (16), the mounting structure is configured to be a groove (171), an opening of the groove (171) faces the central rod (10), and at least a part of the buffer member (61) is press-fitted into the groove (171).

10. The magnetic core assembly (100) of the motor according to claim 1, wherein at least one of the first limiting portion (16) and the second limiting portion (17) is mounted to an end portion of the central rod (10) and a part of at least one of the first limiting portion (16) and the second limiting portion (17) extends into the central rod (10).

11. The magnetic core assembly (100) of the motor according to any one of claims 1 to 10, wherein the central rod (10) is in an interference fit with the magnetic core (20).

12. The magnetic core assembly (100) of the motor according to claim 11, further comprising a limiting rod (62), a first recess portion (18) being provided on the central rod (10), a second recess portion (28) being provided on the magnetic core (20), and an outer circumferential surface of the limiting rod (62) separately engaging with the first recess portion (18) and the second recess portion (28).

13. The magnetic core assembly (100) of the motor according to any one of claims 1 to 12, wherein the magnetic core (20) comprises a multi-layer iron core (21), the multi-layer iron core (21) is stacked in the axial direction of the central rod (10), a coil (25) is disposed between adjacent layers of iron cores (21), and coils (25) of adjacent layers are electrically connected.

14. The magnetic core assembly (100) of the motor according to claim 13, wherein the first limiting portion (16) and the second limiting portion (17) are respectively in direct contact with iron cores (21) located at two ends of the central rod (10) in the multi-layer iron core (21).

15. The magnetic core assembly (100) of the motor according to any one of claims 1 to 14, wherein the central rod (10) is provided with a flow passage (12) for circulating a heat exchange medium.

16. The magnetic core assembly (100) of the motor according to claim 15, wherein the flow passage (12) is provided with an inlet and an outlet located on the top of the central rod (10).

17. A motor (1000), comprising the magnetic core assembly (100) of the motor according to any one of claims 1 to 16.

18. A suspension system, comprising the motor (1000) according to claim 17, the motor (1000) being a linear motor (1000).

19. A vehicle, comprising the suspension system according to claim 18.
